(19) **Europäisches Patentamt**

**European Patent Office**

**Office européen des brevets**

(11) **EP 0 682 865 B1**

(12) **EUROPÄISCHE PATENTSCHRIFT**

(45) Veröffentlichungstag und Bekanntmachung des Hinweises auf die Patenterteilung:
**11.10.2000  Patentblatt 2000/41**

(51) Int. Cl.[7]: **A01N 43/653**,  A01N 43/54
// (A01N43/653, 43:653, 43:54),
(A01N43/54, 43:653)

(21) Anmeldenummer: **95107520.9**

(22) Anmeldetag: **17.05.1995**

(54) **Synergistische Mischung mit 1,2,4-Triazolen**

Synergstic mixture with 1,2,4-triazoles

Mélange synergique avec des 1,2,4-triazoles

(84) Benannte Vertragsstaaten:
**AT BE CH DE DK ES FR GB GR IE IT LI LU NL PT SE**

(30) Priorität: **20.05.1994 CH 157694**

(43) Veröffentlichungstag der Anmeldung:
**22.11.1995  Patentblatt 1995/47**

(60) Teilanmeldung:
**00101764.9 / 1 023 838**

(73) Patentinhaber:
 • **Novartis AG**
   **4058 Basel (CH)**
   Benannte Vertragsstaaten:
   **BE CH DE DK ES FR GB GR IE IT LI LU NL PT SE**
 • **Novartis-Erfindungen Verwaltungsgesellschaft m.b.H.**
   **1235 Wien (AT)**
   Benannte Vertragsstaaten:
   **AT**

(72) Erfinder:
 • **Zeun, Ronald, Dr.**
   **D-79395 Neuenburg (DE)**
 • **Knauf-Beiter, Gertrude, Dr.**
   **D-79379 Müllheim (DE)**

(74) Vertreter:
**Zumstein, Fritz, Dr. et al**
**Dr. F. Zumstein**
**Dipl.-Ing. F. Klingseisen**
**Bräuhausstrasse 4**
**80331 München (DE)**

(56) Entgegenhaltungen:
**EP-A- 0 370 951          EP-A- 0 393 746**
**EP-A- 0 548 025          WO-A-96/01054**
**DE-A- 4 318 372          GB-A- 2 264 641**

Anmerkung:   Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neue mikrobizide Wirkstoff-Gemische mit synergistisch gesteigerter Wirkung, enthaltend mindestens zwei Wirkstoff-Komponenten, und Verfahren zur Anwendung solcher Gemische im Pflanzenschutz.

Die Komponente I ist eine Verbindung ausgewählt aus der Gruppe

(IA) 1-[3-(2-Chlorphenyl)-2-(4-fluorphenyl)oxiran-2-ylmethyl]-1 H-1,2,4-triazol, ("Epoxiconazol"; Referenz: EP-A-196,038);

(IB) 4-(4-Chlorphenyl)-2-phenyl-2-(1,2,4-triazol-1-ylmethyl)-butyronitril, ("Fenbuconazol"; Referenz: EP-A-251,775);

(IC) 5-(4-Chlorbenzyl)-2,2-dimethyl-1-(1H-1,2,4-triazol-1-ylmethyl)-cyclopentanol ("Metconazol"; Referenz: EP-A-267,778);

(ID) 2-(2,4-Dichlorphenyl)-3-(1H-1,2,4-triazol-1-yl)propyl-1,1,2,2-tetrafluorethylether ("Tetraconazol"; Referenz: EP-A-234,242);

(IF) 1-[4-bromo-2-(2,4-dichlorphenyl)tetrahydrofurfuryl]-1 H-1,2,4-triazol,("Bromuconazol"; Referenz EP-A-246,982),

oder jeweils eines ihrer Salze oder Metallkomplexe;

die Komponente II ist die Verbindung

(IIA) 1-[2-(2,4-Dichlorphenyl)-4-propyl-1,3-dioxolan-2-ylmethyl]-1H-1,2,4-triazol, ("Propiconazol"; Referenz: GB-1,522,657)

oder jeweils eines ihrer Salze oder Metallkomplexe.

Unter den Säuren, die zur Herstellung von Salzen der Verbindungen der Formeln I und II verwendet werden können, sind zu nennen:
Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe von basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4.Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

Dem erfindungsgemässen Wirkstoffgemisch kann man auch weitere agrarchemische Aktivsubstanzen wie Insektizide, Akarizide, Nematizide, Herbizide, Wuchsregulatoren und Düngemittel, insbesondere aber weitere Mikrobizide, zufügen.

Synergistizche Mischungen aus Propiconazol und weiteren Triazol Fungiziden sind offenbart in EP 393 746 A, GB 2 264 641 A und EP 370 951 A.
Mischungen aus Cyprodinil und Triazolen sind beschrieben in EP 548 025 A.

Es hat sich nun überraschenderweise gezeigt, dass die erfindungsgemässen Mischungen der Komponenten I und II in ihrer fungiziden Wirkung nicht nur additive Wirkung, sondern deutliche synergistisch gesteigerte Wirkung entfalten.

Eine weitere bevorzugte Gruppe sind Dreikomponenten-Mischungen welche zusätzlich den Wirkstoff "Cyprodinil" (IIB) enthalten, also worin die Komponente I eine Verbindung ausgewählt aus der Gruppe

IA ("Epoxiconazol"), IB ("Fenbuconazol"), IC ("Metconazol"), ID ("Tetraconazol"), und IF ("Bromuconazol"); und worin die Komponente II
IIA ("Propiconazol") ist und als dritter Wirkstoff IIB ("Cyprodinil") zugesetzt ist und worin das Gewichtsverhältnis IIA:IIB = 1:6 bis 6:1 beträgt.

Gegenstand der vorliegenden Erfindung ist auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) einem Wirkstoff der Formel I oder einem seiner Salze, und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 1:10 bis 10:1, bevorzugt I:II = 1:6 bis 6:1, besonders bevorzugt I:II = 1:3 bis 3:1. Weitere günstige Mischungsverhältnisse I:II sind z.B. 1:1, 1:2, 1:4, 2:1, 2:3.

In den Dreikomponenten Mischungen sind für die Komponente II bevorzugte Mischungsverhältnisse IIA:IIB = 1:6 bis 6:1; besonders bevorzugt IIA:IIB = 1:5 bis 1:1.

Die erfindungsgemässen Wirkstoffmischungen I+II besitzen sehr vorteilhafte kurative, präventive und systemische Fungizid-Eigenschaften zum Schutz von Pflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Sie können auch als Beizmittel zur Behandlung von Pflanzenvermehrungsgut, insbesondere von Saatgut (Früchte, Knollen, Körner) und Pflanzenstecklingen (z.B. Reis) zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch Umweltfreundlichkeit aus.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Alternaria, Pyricularia und Pseudocercosporella herpotrichoides); Oomyceten (z.B. Phytophthora, Peronospora, Bremia, Pythium, Plasmopara).

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Besonders vorteilhaft sind die erfindungsgemässen Wirkstoffgemische für die Anwendungen in Getreide, ganz besonders in Weizen und Gerste.

Die Wirkstoff-Gemische der Formeln I und II werden üblicherweise in Form von Zusammensetzungen verwendet. Die Wirkstoffe der Formeln I und II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt (z.B. im Reisanbau) oder die Substanzen in fester Form in den Boden einbringt z.B. in Form von Granulat (Bodenapplikation). Die Verbindungen der Formeln I und II können auch zur Saatgutbehandlung auf Samenkörner aufgebracht werden (Coating), indem man die Knollen bzw. Körner entweder nacheinander in einer flüssigen Zubereitung eines Wirkstoffs tränkt oder sie mit einer bereits kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 50 g bis 2 kg AS/ha, insbesondere bei 100 g bis 1000 g AS/ha, besonders bevorzugt bei 400 g bis 1000 g AS/ha. Für die Saatgutbehanlung sind die Aufwandmengen 0.5 g-1000 g, vorzugsweise 5 g-100 g AS pro 100 kg Saatgut.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoffe der Formeln I und II, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die nachfolgenden Beispiele dienen der Illustration der Erfindung, wobei "Wirkstoff" ein Gemisch aus Verbindung I und Verbindung II in einem bestimmten Mischungs-Verhältnis bedeutet.

Formulierungsbeispiele

| Spritzpulver | a) | b) | c) |
|---|---|---|---|
| Wirkstoff [I:II = 1:3(a), 1:2(b), 1:1(c)] | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
| --- | --- |
| Wirkstoff (I:IIA:IIB = 1:1:4) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Verdünnung hergestellt werden, die sich im Pflanzenschutz, einsetzen lassen.

| Stäubemittel | a) | b) | c) |
| --- | --- | --- | --- |
| Wirkstoff [I:II = 1:4 (a); 1:5 (b) und 1:1 (c)] | 5 % | 6 % | 4 % |
| Talkum | 95 % | - | - |
| Kaolin | - | 94 % | - |
| Gesteinsmehl | - | - | 96 % |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
| --- | --- |
| Wirkstoff (I:II = 1:1,5) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
| --- | --- |
| Wirkstoff (I:II = 3:5) | 8% |
| Polyethylenglykol (MG 200) | 3 % |
| Kaolin (MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:IIA:IIIB = 1:2:5) | 40 % |
| Propylenglykol | 10 % |
| Nonylphenolpolyethylenglykolether (15 Mol Et-oxid) | 6 % |
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

Biologische Beispiele

Ein synergistischer Effekt liegt dann vor, wenn die Wirkung der Wirkstoffkombination grösser ist als die Summe der Wirkungen der Einzelkomponenten.
Die zu erwartende Wirkung E für eine gegebene Wirkstoff-Kombination, z.B. zweier Fungizide, gehorcht der COLBY-Formel und kann wie folgt berechnet werden, (COLBY, S.R. "Calculating synergistic and antagonistic responses of herbicide combination". Weeds, Vol.15, Seiten 20-22; 1967):

ppm = Milligramm Wirkstoff (=WS) pro Liter Spritzbrühe
X = % Wirkung durch Wirkstoff I bei Anwendung von p ppm Wirkstoff
Y = % Wirkung durch Wirkstoff II bei Anwendung von q ppm Wirkstoff
E = die erwartete Wirkung der Wirkstoffe I+II bei Anwendung von p+q ppm Wirkstoff (additive Wirkung),
dann ist nach Colby:

$$E = X + Y - \frac{X \cdot Y}{100}$$

Wenn die tatsächlich beobachtete Wirkung (O) grösser ist als die erwartete (E), so ist die Kombination in ihrer Wirkung überadditiv, d.h. es liegt ein synergistischer Effekt vor.

O/E = Synergiefaktor (SF).

In den folgenden Beispielen wird der Befall der unbehandelten Pflanzen gleich 100% gesetzt, was einer Wirkung von 0% entspricht.

Beispiel 1: Wirkung gegen Puccinia recondita auf Weizen

7 Tage alte Weizenpflanzen werden mit einer aus dem formulierten Wirkstoff bzw. Wirkstoffkombination hergestellten Spritzbrühe tropfnass eingesprüht. Nach 48 Stunden werden die behandelten Pflanzen mit einer Konidiensuspension des Pilzes infiziert, anschliessend werden die behandelten Pflanzen während 2 Tagen bei 90-100% relativer Luftfeuchtigkeit und 20°C inkubiert und während 9 weiteren Tagen im Gewächshaus bei 21°C aufgestellt. 11 Tage nach der Infektion wird der Pilzbefall beurteilt.Dabei werden folgende Resultate erzielt:

Tab. 1

| Wirkstoffgemisch: IA=Epoxiconazol, IIA=Propiconazol, | | | | | | |
|---|---|---|---|---|---|---|
| Vers. Nr. | mg WS pro Liter | | I:II | % Wirkung | | Synergiefaktor |
| | WS IA | WS IIA | | gefunden O | berechnet E | SF O/E |
| 0 | - | - | | 0 (Kontrolle) | | |
| 1 | 0.6 | - | | 0 | | |
| 2 | 2 | - | | 13 | | |
| 3 | - | 0.2 | | 0 | | |
| 4 | - | 2 | | 0 | | |
| 5 | - | 6 | | 35 | | |
| 6 | 0.6 | 0.2 | 3:1 | 13 | 0 | * |
| 7 | 0.6 | 2 | 1:3 | 13 | 0 | * |
| 8 | 2 | 0.2 | 10:1 | 40 | 13 | 3.1 |
| 9 | 2 | 2 | 1:1 | 40 | 13 | 3.1 |

\* Synergiefaktor nicht berechenbar

Beispiel 2: Wirkung gegen Erysiphe graminis auf Gerste

6 Tage alte Gerstenpflanzen werden mit einer aus dem formulierten Wirkstoff bzw. Wirkstoffkombination hergestellten Spritzbrühe tropfnass besprüht. Nach 2 Tagen werden die Pflanzen mit Sporen von Erysiphe graminis inokuliert und bei 21°C und 60-70% Luftfeuchtigkeit im Gewächshaus inkubiert. Nach 11 Tagen wird der Pilzbefall beurteilt. Dabei werden folgende Resultate erzielt:

Tab. 2

| Wirkstoffgemisch: IA=Epoxiconazol, IIA=Propiconazol, | | | | | | |
|---|---|---|---|---|---|---|
| Vers. Nr. | mg WS pro Liter | | I:II | % Wirkung | | |
| | WS IA | WS IIA | | gefunden O | berechnet E | SF O/E |
| 0 | -- | -- | | 0 (Kontrolle) | | |
| 1 | 0.2 | - | | 0 | | |
| 2 | 0.6 | - | | 0 | | |
| 3 | 2 | - | | 70 | | |
| 4 | - | 0.06 | | 0 | | |
| 5 | - | 0.2 | | 0 | | |
| 6 | - | 0.6 | | 50 | | |
| 7 | - | 2 | | 85 | | |
| 8 | 0.2 | 0.2 | 1:1 | 50 | 0 | * |
| 9 | 0.2 | 0.6 | 1:3 | 65 | 50 | 1.3 |
| 10 | 0.6 | 0.06 | 10:1 | 65 | 0 | * |
| 11 | 0.6 | 0.2 | 3:1 | 65 | 0 | * |
| 12 | 0.6 | 0.6 | 1:1 | 70 | 50 | 1.4 |
| 13 | 2 | 0.2 | 10:1 | 85 | 70 | 1.2 |

* Synergiefaktor nicht berechenbar

Beispiele 3-5/Tab. 3-5: Wirkung gegen Erysiphe graminis auf Weizen:

7 Tage alte Weizenpflanzen werden mit einer aus dem formulierten Wirkstoff bzw. Wirkstoffkombination hergestellten Spritzbrühe tropfnass besprüht. Nach 1 Tag werden die Pflanzen mit Sporen von Erysiphe graminis inokuliert und bei 20°C und 50-80% Luftfeuchtigkeit im Gewächshaus inkubiert. Nach 10 Tagen wird der Pilzbefall beurteilt. Dabei werden folgende Resultate erzielt:

Beispiel 3/Tab.3

| Wirkstoffgemisch: IB=Fenbuconazol, IIA=Propiconazol, | | | | | | |
|---|---|---|---|---|---|---|
| Vers. Nr. | mg WS pro Liter | | I:II | % Wirkung | | |
| | WS IB | WS IIA | | gefunden O | berechnet E | SF O/E |
| 0 | -- | -- | | 0 (Kontrolle) | | |
| 1 | 0.06 | - | | 0 | | |
| 2 | 0.2 | - | | 17 | | |
| 3 | 0.6 | - | | 42 | | |
| 4 | 6 | | | 48 | | |
| 5 | - | 0.06 | | 10 | | |
| 6 | - | 0.6 | | 13 | | |
| 7 | 0.06 | 0.06 | 1:1 | 60 | 10 | 6 |
| 8 | 0.06 | 0.6 | 1:10 | 55 | 13 | 4.2 |
| 9 | 0.2 | 0.06 | 3:1 | 49 | 25 | 2.0 |

Beispiel 3/Tab.3 (fortgesetzt)

| Wirkstoffgemisch: IB=Fenbuconazol, IIA=Propiconazol, | | | | | | |
|---|---|---|---|---|---|---|
| Vers. Nr. | mg WS pro Liter | | I:II | % Wirkung | | |
| | WS IB | WS IIA | | gefunden O | berechnet E | SF O/E |
| 10 | 0.2 | 0.6 | 1:3 | 49 | 28 | 1.8 |
| 11 | 6 | 0.6 | 10:1 | 75 | 55 | 1.4 |

Beispiel 4/Tab.4

| Wirkstoffgemisch: IC=Metconazol, IIA=Propiconazol | | | | | | |
|---|---|---|---|---|---|---|
| Vers. Nr. | mg WS pro Liter | | I:II | % Wirkung | | |
| | WS IC | WS IIA | | gefunden O | berechnet E | SF O/E |
| 0 | -- | -- | | 0 (Kontrolle) | | |
| 1 | 0.06 | - | | 0 | | |
| 2 | 0.2 | - | | 10 | | |
| 3 | 0.6 | - | | 19 | | |
| 4 | 2 | - | | 22 | | |
| 5 | - | 0.6 | | 0 | | |
| 6 | - | 2 | | 64 | | |
| 7 | 0.06 | 0.6 | 1:10 | 17 | 0 | * |
| 8 | 0.2 | 0.6 | 1:3 | 32 | 1 | 32 |
| 9 | 0.2 | 2 | 1:10 | 78 | 64 | 1.2 |
| 10 | 0.6 | 0.6 | 1:1 | 38 | 19 | 2.0 |
| 11 | 2 | 0.6 | 3:1 | 29 | 22 | 1.3 |

* Synergiefaktor nicht berechenbar

Beispiel 5/Tab.5

| Wirkstoffgemisch: ID=Tetraconazol, IIA=Propiconazol | | | | | | |
|---|---|---|---|---|---|---|
| Vers. Nr. | mg WS pro Liter | | I:II | % Wirkung | | |
| | WS ID | WS IIA | | gefunden O | berechnet E | SF O/E |
| 0 | -- | -- | | 0 (Kontrolle) | | |
| 1 | 0.06 | - | | 1 | | |
| 2 | 0.6 | - | | 37 | | |
| 3 | 6 | - | | 47 | | |
| 4 | - | 0.06 | | 10 | | |
| 5 | - | 0.6 | | 13 | | |
| 6 | 0.06 | 0.06 | 1:1 | 46 | 11 | 4.2 |

Beispiel 5/Tab.5 (fortgesetzt)

| Wirkstoffgemisch: ID=Tetraconazol, IIA=Propiconazol | | | | | | |
|---|---|---|---|---|---|---|
| Vers. Nr. | mg WS pro Liter | | I:II | % Wirkung | | |
| | WS ID | WS IIA | | gefunden O | berechnet E | SF O/E |
| 7 | 0.06 | 0.6 | 1:10 | 35 | 14 | 2.5 |
| 8 | 6 | 0.6 | 10:1 | 63 | 54 | 1.2 |

**Patentansprüche**

1. Pflanzenmikrobizides Mittel enthaltend zwei Wirkstoff-Komponenten in einer synergistisch wirkenden Menge, zusammen mit einem geeigneten Trägermaterial, dadurch gekennzeichnet, dass die Komponente I eine Verbindung ausgewählt aus der Gruppe

   (IA) 1-[3-(2-Chlorphenyl)-2-(4-fluorphenyl)oxiran-2-ylmethyl]-1 H-1,2,4-triazol, ("Epoxiconazol");
   (IB) 4-(4-Chlorphenyl)-2-phenyl-2-(1,2,4-triazol-1-ylmethyl)-butyronitril, ("Fenbuconazol");
   (IC) 5-(4-Chlorbenzyl)-2,2-dimethyl-1-(1H-1,2,4-triazol-1-ylmethyl)-cyctopentanol ("Metconazol");
   (ID) 2-(2,4-Dichlorphenyl)-3-(1H-1,2,4-triazol-1-yl)propyl-1,1,2,2-tetrafluorethylether ("Tetraconazol");
   (IF) 1-[4-bromo-2-(2,4-dichlorphenyl)tetrahydrofurfuryl]-1H-1,2,4-triazol, ("Bromuconazol"),
   oder jeweils eines ihrer Salze oder Metallkomplexe;

   und dass die Komponente II

   (IIA) 1-[2-(2,4-Dichlorphenyl)-4-propyl-1,3-dioxolan-2-ylmethyl]-1H-1,2,4-triazol, ("Propiconazol")
   oder jeweils eines ihrer Salze oder Metallkomplexe ist.

2. Mittel gemäss Anspruch 1, worin die Komponente I die Verbindung IA ("Epoxiconazol") ist.

3. Mittel gemäss Anspruch 1, worin die Komponente I die Verbindung IB ("Fenbuconazol") ist.

4. Mittel gemäss Anspruch 1, worin die Komponente I die Verbindung IC ("Metconazol") ist.

5. Mittel gemäss Anspruch 1, worin die Komponente I die Verbindung ID ("Tetraconazol") ist.

6. Mittel gemäss Anspruch 1, worin die Komponente I die Verbindung IF ("Bromuconazol") ist.

7. Mittel gemäss einen der Anspüche 1 bis 6, dadurch gekennzeichnet, dass es zusätzlich den Wirkstoff "Cyprodinil" (IIB) enthält, wobei das Mischungsverhältnis zwischen "Propiconazol" und "Cyprodinil" zwischen 1:6 und 6:1 liegt.

8. Verfahren zur Bekämpfung und Verhütung von Pilzen auf Pflanzen, dadurch gekennzeichnet, dass man in beliebiger Reihenfolge oder gleichzeitig eine durch Pilze befallene oder gefährdete Stelle mit der Komponente I und der Komponente II gemäss Anspruch 1 behandelt.

9. Verfahren gemäss Anspruch 8, dadurch gekennzeichnet, dass Getreide behandelt wird.

10. Verfahren gemäss Anspruch 8, dadurch gekennzeichnet, dass pflanzliches Vermehrungsgut, insbesondere Saatgut behandelt wird.

**Claims**

1. A plant-microbicidal composition comprising two active ingredient components in a synergistically effective amount, together with a suitable carrier, wherein component I is a compound selected from the group

   (IA) 1-[3-(2-chlorophenyl)-2-(4-fluorophenyl)oxiran-2-ylmethyl]-1H-1,2,4-triazole ("epoxiconazole");
   (IB) 4-(4-chlorophenyl)-2-phenyl-2-(1,2,4-triazol-1-ylmethyl)-butyronitrile ("fenbuconazole");
   (IC) 5-(4-chlorobenzyl)-2,2-dimethyl-1-(1H-1,2,4-triazol-1-ylmethyl)-cyclopentanol ("metconazole");

(ID) 2-(2,4-dichlorophenyl)-3-(1H-1,2,4-triazol-1-yl)propyl-1,1,2,2-tetrafluoroethyl ether ("tetraconazole");
(IF) 1-[4-bromo-2-(2,4-dichlorophenyl)tetrahydrofurfuryl]-1H-1,2,4-triazole ("bromuconazole");
or in each case one of the salts or metal complexes thereof; and

component II is

(IIA) 1-[2-(2,4-dichlorophenyl)-4-propyl-1,3-dioxolan-2-ylmethyl]-1H-1,2,4-triazole ("propiconazole")
or one of the salts or metal complexes thereof.

2. A composition according to claim 1 wherein component I is compound IA ("epoxiconazole").

3. A composition according to claim 1 wherein component I is compound IB ("fenbuconazole").

4. A composition according to claim 1 wherein component I is compound IC ("metconazole").

5. A composition according to claim 1 wherein component I is compound ID ("tetraconazole").

6. A composition according to claim 1 wherein component I is compound IF ("bromuconazole").

7. A composition according to any one of claims 1 to 6 additionally comprising the active ingredient "cyprodinil" (IIB), the mixing ratio of "propiconazole" to "cyprodinil" being from 1:6 to 6:1.

8. A method of controlling and preventing the occurrence of fungi on plants, which comprises treating with component I and component II according to claim 1, in any desired sequence or simultaneously, a site infested by or threatened with infestation by fungi.

9. A method according to claim 8 wherein cereal is treated.

10. A method according to claim 8 wherein plant propagation material, especially seed, is treated.

**Revendications**

1. Un agent microbicide végétal contenant 2 composants actifs en une quantité efficace du point de vue synergique, ensemble avec un support approprié, caractérisé en ce que le composant I est un composé choisi parmi le groupe

(IA) du 1-[3-(2-chlorophényl)-2-(4-fluorophényl)oxiran-2-ylméthyl]-1H-1,2,4-triazole, ("Epoxiconazole");
(IB) du 4-(4-chlorophényl)-2-phényl-2-(1,2,4-triazol-1-ylméthyl)butyronitrile, ("Fenbuconazole");
(IC) du 5-(4-chlorobenzyl)-2,2-diméthyl-1-(1H-1,2,4-triazol-1-ylméthyl)-cyclopentanol ("Metconazole");
(ID) de l'éther 2-(2,4-dichlorophényl)-3-(1H-1,2,4-triazol-1-yl)propyl-1,1,2,2-tétrafluoroéthylique ("Tetraconazole");
(IF) du 1-[4-bromo-2-(2,4-dichlorophényl)tétrahydrofurfuryl]-1H-1,2,4-triazole, ("Bromuconazole"),
ou un de ses sels ou de ses complexes métalliques;

et en ce que le composant II est

(IIA) le 1-[2-(2,4-dichlorophényl)-4-propyl-1,3-dioxolan-2-ylméthyl]-1H-1,2,4-triazole, ("Propiconazole")
ou un de ses sels ou de ses complexes métalliques.

2. Un agent selon la revendication 1, où le composant I est le composé IA ("Epoxiconazole").

3. Un agent selon la revendication 1, où le composant I est le composé IB ("Fenbuconazole").

4. Un agent selon la revendication 1, où le composant I est le composé IC ("Meteonazole").

5. Un agent selon la revendication 1, où le composant I est le composé ID ("Tetraconazole").

6. Un agent selon la revendication 1, où le composant I est le composé IF ("Bromuconazole").

7. Un agent selon l'une quelconque des revendications 1 à 6, caractérisé en ce qu'il contient également la matière active "Cyprodinil" (IIB), le rapport de mélange entre le "Propiconazole" et le "Cyprodinil" étant compris entre 1:6 et 6:1.

8. Un procédé de lutte contre et de prévention des champignons sur les plantes, caractérisé en ce qu'avec le composant I et le composant II selon la revendication 1, dans n'importe quel ordre ou simultanément, on traite une zone infestée ou menacée par des champignons .

9. Un procédé selon la revendication 8, caractérisé en ce qu'on traite des céréales.

10. Un procédé selon la revendication 8, caractérisé en ce qu'on traite l'organe de propagation des plantes, en particulier les semences.